(19) Europäisches Patentamt
European Patent Office
Office européen des brevets

(11) **EP 2 336 617 B1**

(12) **EUROPÄISCHE PATENTSCHRIFT**

(45) Veröffentlichungstag und Bekanntmachung des Hinweises auf die Patenterteilung:
**26.02.2014  Patentblatt 2014/09**

(51) Int Cl.:
**B01D 15/08** *(2006.01)*    **G01N 30/42** *(2006.01)*

(21) Anmeldenummer: **11155542.1**

(22) Anmeldetag: **14.05.2005**

(54) **Modulare Ventiltechnik und seine Verwendung in einem Verfahren zur Herstellung von chemischen und pharmazeutischen Produkten mit integrierter Mehrsäulen-Chromatographie**

Modular Valve System and its use in a method for producing chemical and pharmaceutical products with integrated multi-column chromatography

Système de vanne modulaire et son utilisation dans un procédé de fabrication de produits chimiques et pharmaceutiques dotés d'une chromatographie à plusieurs colonnes intégrée

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **21.05.2004   DE 102004025000**

(43) Veröffentlichungstag der Anmeldung:
**22.06.2011   Patentblatt 2011/25**

(62) Dokumentnummer(n) der früheren Anmeldung(en) nach Art. 76 EPÜ:
**05742674.4 / 1 753 517**

(73) Patentinhaber: **Bayer Intellectual Property GmbH 40789 Monheim (DE)**

(72) Erfinder:
- **Strube, Jochen**
  **58099, Hagen (DE)**
- **Klatt, Karsten-Ulrich**
  **53175, Bonn (DE)**

- **Noeth, Gerhard**
  **Deceased (DE)**
- **Greifenberg, Joern**
  **51429, Bergisch Gladbach (DE)**
- **Böcker, Sebastian**
  **42799, Leichlingen (DE)**
- **Kansy, Heinz**
  **Köln, 51061 (DE)**
- **Jähn, Peter**
  **82393, Isseldorf (DE)**
- **Justen, Berthold**
  **51399, Burscheid (DE)**

(74) Vertreter: **BIP Patents
c/o Bayer Intellectual Property GmbH
Creative Campus Monheim
Alfred-Nobel-Straße 10
40789 Monheim (DE)**

(56) Entgegenhaltungen:
**WO-A1-03/052308     US-B1- 6 386 508**

**Beschreibung**

Die Erfindung betrifft ein Modular-valve-system (MVS) und seine Verwendung in einem chromatographischen Verfahren zur Stofftrennung im Rahmen der Herstellung von Chemikalien wie z.B. chiralen Pharmazeutika, Isomeren oder Biomolekülen im Kleinmaßstab und Produktionsmaßstab, basierend auf Simulated Moving Bed (SMB = Gegenstrom Chromatographie) Technologie.

SMB ist ein Verfahren, das kontinuierliche Stofftrennungen erlaubt, indem Gegenstrom zwischen Adsorbens und Mobiler Phase (Flüssigkeit, Gas oder im überkritischen Zustand) imitiert (simuliert) wird.

US Patent No 3,706,612 von A.J. de Rosset und R. W. Neuzil beschreibt eine Simulated Moving Bed (Gegenstrom Chromatographie) Anlage im Pilotmaßstab. Ebenso wird dort ein Betriebsproblem beschrieben, wenn solche Anlagen im Großmaßstab betrieben werden und eine Kreislaufpumpe benutzt wird, um den Umlauf der Flüssigkeit im Prozess zu gewährleisten. Diese Erfindung (US A 3 706 612) beschreibt die Verwendung eines Ventils am Ausgangsende jedes Adsorbensbettes, um einen entgegengesetzten Fluss zu verhindern.

US Patent No 4,434,051 von M. W. Golem beschreibt einen Apparat, der Gegenstrom Chromatographie erlaubt, indem eine große Anzahl von Mehrwege- Ventilen anstatt eines einzigen Rotationsventils benutzt werden.

Die Trennung von racemischen Gemischen an chiralen Adsorbens wird in einem Artikel im Journal of Chromatography, 590 (1992), pp. 113-117 beschrieben, dort wird eine alternative Anordnung aus 8 Adsorptions-Kammern und 4 Rotationsventilen benutzt.

US Pat No. 3,268,605 beschreibt ein Steuerungssystem, welches die Flussrate von dreien der Hauptströme durch Flussregler und den vierten Strom durch einen Druckregler steuert. Ein ähnliches Steuerungskonzept für chirale Stoffsysteme wird in WO 92/16274 der Bayer AG beschrieben. Diese Referenz verwendet eine Reihe von Zweiwege-Ventilen, um den Gegenstrom des Adsorbens zu simulieren.

In all diesen bekannten Techniken wird jedoch die Trennleistung durch das Holdup-Volumen der Kreislaufstrom-Pumpe gestört, was durch zusätzliche Maßnahmen, wie z.B. Asynchrones Takten, Veränderung der Säulenlängen oder Flussanpassung [wie z.B. in EP 0688590 A1, Sepharex (Novasep), "Totvolumenkompensation der Kreislaufpumpe durch Reduktion des Volumens" (Länge); "asynchrones Takten" wie in EP 0688589 A1, Sepharex (Novasep); EP 0688588 A1 "Durchsatzänderung der Rezyklierpumpe"] ausgeglichen werden muss. In DE 19833502 A1 der Novasep, wird dazu die SMB Basisregelung über Druck durch gleichzeitige Variation von mindestens zwei Durchsätzen beschrieben.

Konsequenter Weise wurde das Asynchrone Takten in einer Zone zum asynchronen Takten mehrerer oder aller Zonen (WO 00/25885 A) weiterentwickelt.

Beispiele für den Einsatz der SMB Technologie liefern z.B. die WO 93/04022 A der Daicel in welcher SMB zur Racemattrennung mit anschließender Re-Racemisierung des unerwünschten Isomers eingesetzt wird, oder WO 91/13046 A der Daicel welche den Einsatz von SMB mit chiraler stationäre Phase ebenfalls zur Racemattrennung beschreibt.

Der Stand der Technik zur Regelung der internen und externen Mengenströme bei der simulierten Gegenstromchromatographie ist z.B. in US Pat. 4499115, US Pat. 5685992, US Pat. 5762806, EP 960642 A1 und DE 19833502 A1 beschrieben.

Üblicherweise werden dort zur Förderung der Fluide 5 Pumpen eingesetzt, wobei sich jeweils eine Pumpe in den entsprechenden Zu- und Abfuhrleitungen - Feed- Eluens, Extrakt - und Raffinatleitungen - befindet, und eine weitere Pumpe innerhalb eines geschlossenen Kreislaufes angeordnet ist. Zur Simulation des Feststoffgegenstromes wird nach einem bestimmten Zeitintervall, der Taktzeit $\tau$, umgetaktet, d.h. durch entsprechende Ventilschaltungen werden die Zugabe- und Entnahmestellen um eine Säule in Fließrichtung der Fluidphase verschoben. Die Kreislaufpumpe "wandert" somit durch die einzelnen Zonen und fördert während eines Umlaufs unterschiedliche Volumenströme.

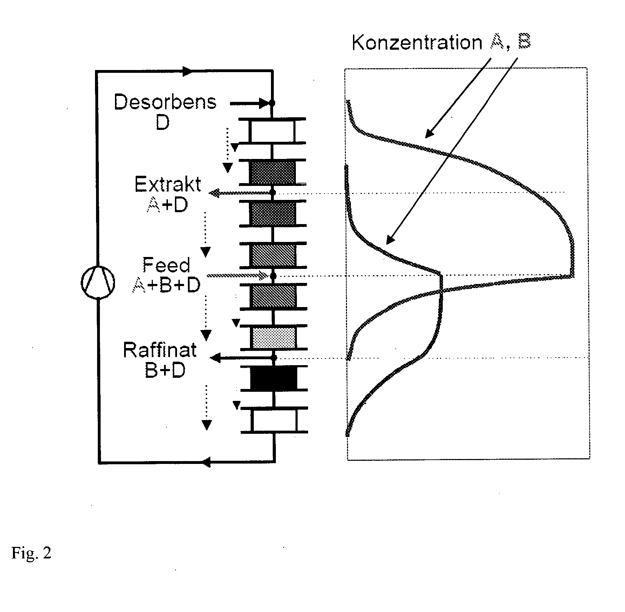

Figur 2 zeigt einen üblichen SMB Prozess. Der Fluidstrom durchläuft beim SMB-Betrieb im Kreislauf mehrere mit Adsorbens gefüllte Festbettsäulen. Die Anlage wird durch die kontinuierliche Zugabe bzw. Entnahme der Feed-, Desorbens, Extrakt- und Raffinatströme in vier funktionelle Zonen unterteilt. Jede einzelne dieser Zonen übernimmt dabei eine spezielle Trenn- bzw. Aufarbeitungsfunktion. Dargestellt ist auch der Recyclestrom, gefördert durch eine Recyclepumpe. Je funktioneller Zone, zwischen den Positionen der externen Zu- und Abfuhrströme, befinden sich jeweils ein bis mehrere Chromatographische Säulen. Das sich bei geeigneter Wahl der Betriebsparameter im zyklisch stationären Zustand innerhalb der SMB Anlage einstellende Konzentrationsprofil der zu trennenden Hauptkomponenten ist schematisch auf dem rechten Teil von Figur 2 relativ zu den Positionen der Zu- und Abfuhrströme zum Zeitpunkt des Taktendes dargestellt.

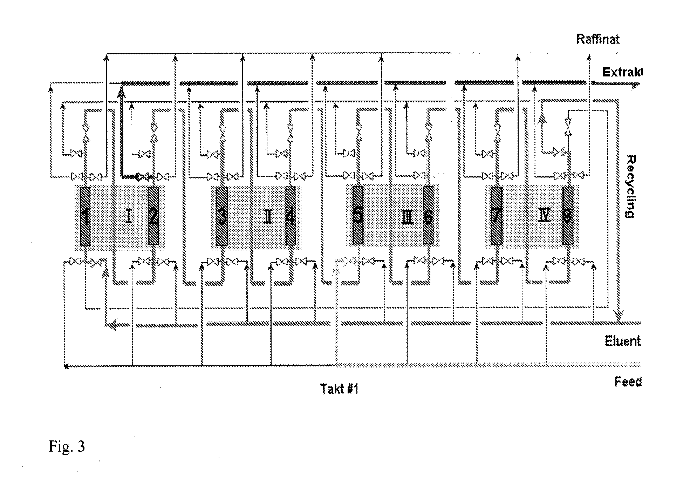

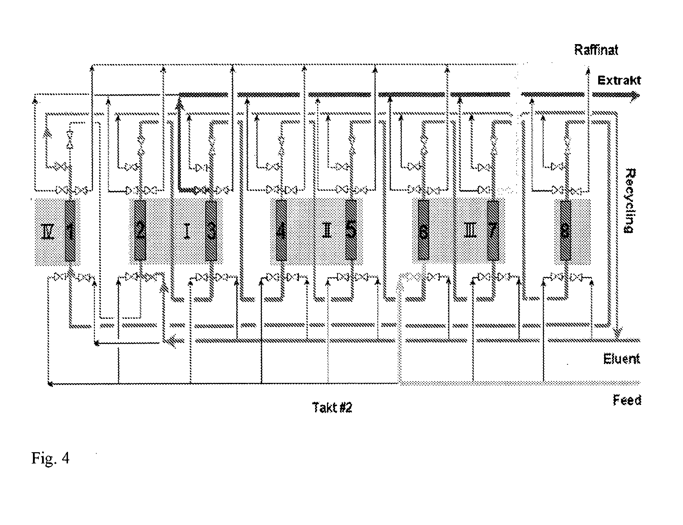

Figur 3 und 4 zeigen schematisch den apparativen Aufbau eines üblichen SMB Verfahrens mit der Anordnung von Einzelventilen in zwei aufeinanderfolgenden Takten. In der Zufuhrleitung jeder Säule 2 Einzelventile für die Schaltung von alternativ Feed- oder Eluensstrom und in der Abfuhrleitung jeder Säule 3 Einzelventile für alternativ Raffinat-, Extrakt- oder Recyclingstrom. Bei jedem weiteren Takt werden die Ventilschaltungen um eine Position auf die nächste Säule verlagert.

Sind die Verbindungsleitungen zwischen den Säulen unterschiedlich lang und beinhalten ein gegenüber dem Säulenvolumen nicht zu vernachlässigendes Totvolumen, so muss dieser Tatsache Rechnung getragen, und einer damit evtl. verbundenen Verschlechterung der Trennleistung entgegengewirkt werden. Mögliche Abhilfe schaffen ein asynchrones Umschalten der Ventile (EP 688589 B1), eine spezifische Anpassung der Zonenvolumina (EP 688690 B2) oder eine Anpassung der Fördermenge der Kreislaufpumpe (EP 688588 B1).

Für einen kontinuierlichen, bestimmungsgemäßen Betrieb ist die möglichst exakte Einhaltung der internen und externen Mengenströme eine unabdingbare Voraussetzung. Dazu werden üblicherweise drei der vier zugeführten und abgeführten Mengenströme ($Q_F$, $Q_D$, $Q_{Ex}$ und $Q_{Raf}$) konstant geregelt, während der vierte Teilstrom über einen spezifizierten Systemdruck so nachgeregelt wird, dass dieser Systemdruck konstant bleibt womit die Gesamtmassenbilanz eingehalten wird.

Diese bislang übliche Betriebsweise von SMB Chromatographieanlagen weist daher folgende gravierende Nachteile auf:

- Die Druckregelung muss einerseits sämtliche Störungen im Bereich der Mengenströme möglichst schnell und exakt kompensieren, andererseits wird sie selbst durch betriebsbedingte Druckschwankungen (z.B. auch durch die zyklischen Umschaltvorgänge) teilweise empfindlich gestört. Insbesondere bei hohen Reinheitsanforderungen und/oder kurzen Zykluszeiten kann dieses zu Instabilitäten bis hin zum Verlust der Trennleistung führen.

- Das Schließen der Mengenbilanz über eine Druckregelung erfordert einen permanent geschlossenen Kreislauf. Kurzfristiges Öffnen des Kreislaufes z.B. zum Ausschleusen von Verunreinigungen ist hiermit nicht möglich.

- Die interne Kreislaufpumpe wird mit ständig wechselnden Mengenströmen konfrontiert, des weiteren verursacht diese Art der Verschaltung variable Totvolumina und somit inhärente Prozessstörungen, die kompensiert werden müssen. Wie bereits erwähnt, gestaltet sich dieses insbesondere bei kurzen Zykluszeiten und anspruchsvollen Trennaufgaben vielfach als schwierig.

Im bestimmungsgemäßen Kreislaufbetrieb existieren beim SMB Prozess generell 4 interne ($Q_I$, $Q_{II}$, $Q_{III}$ und $Q_{IV}$) und 4 externe Mengenströme ($Q_F$, $Q_D$, $Q_{Ex}$ und $Q_{Raf}$), die über folgende Massenbilanzen

$$Q_I = Q_D + Q_{IV}$$
$$Q_{II} = Q_I - Q_{Ex}$$
$$Q_{III} = Q_{II} + Q_F$$
$$Q_{IV} = Q_{III} - Q_{Raf}$$

$$(1)$$

miteinander verknüpft sind. Für die Festlegung des Betriebspunktes müssen 3 externe und ein interner Mengenstrom sowie die Taktzeit $\tau$ derart spezifiziert werden, dass die Trennaufgabe gelöst und dadurch wirtschaftlich optimaler Betrieb bei Einhaltung der vorgegebenen Produktreinheiten erzielt wird. Die Taktzeit $\tau$ bestimmt dabei die "Geschwindigkeit" des scheinbaren Feststoffgegenstroms.

Im gesamten Stand der Technik werden zum Betrieb der SMB jedoch grundsätzlich Kreislauf pumpen eingesetzt, was zu den bereits beschriebenen Problemen durch das Holdup Volumen der Pumpe führt.

Es ist jedoch wider Erwarten keine Kreislaufstrom-Pumpe notwendig ist, um den Fluidkreislauf in einem SMB aufrecht zu erhalten.

In einem SMB Verfahren kann also statt des bisher üblichen 5 Pumpen- Konzeptes ein 4 Pumpen-Konzept angewendet werden, indem der Eluentstrom mit konstantem Fluss sowie Extrakt-, Raffinat- und Feed-Strom gepumpt werden. Für die zwei Auslass-Ströme sind dabei alternativ auch Regelventile anstelle zwangsfördernder Pumpen möglich.

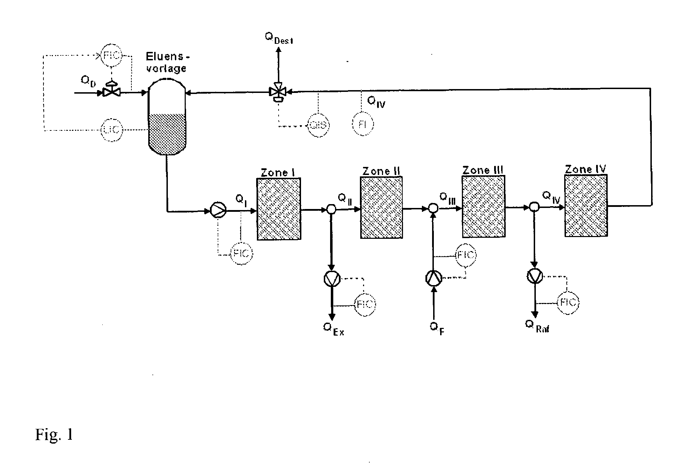

Figur 1 zeigt das Prinzip einer SMB Chromatographieanlage. Die Anlage ist hier nur schematisch dargestellt, es fehlen z.B. die enthaltenen detaillierten Leitungswege, die Ventilverschaltungen sowie die sonstige Instrumentierung. Des weiteren repräsentieren zur besseren Übersicht die dargestellten Blöcke jeweils die funktionellen Zonen und nicht einzelne Trennsäulen. Das Symbol FI stellt eine kontinuierliche Durchflussmessung dar, FIC und LIC repräsentieren kontinuierliche Durchfluss- bzw. Standregelungen inklusive der dazu benötigten Mess- und Stelleinrichtungen. Q stellt, mit unterschiedlichen Indices versehen, jeweils einen Mengenstrom dar, der an einer bestimmten Stelle der Chromatographieanlage auftritt.

Der Kreislaufstrom wird, wie in Figur 1 zu erkennen, mit einem Zwischenbehälter unterbrochen/getrennt. Das erlaubt neben einer robusten Mengenstromregelung zusätzlich eine Ausschleusung von Fraktionen mit potentiellen Verunreinigungen im laufenden Betrieb, die durch geeignete online Analytik wie z.B. UV, NIR, RI oder US bestimmt werden können (in Figur 1 als QIS gekennzeichnet). Die direkt hinter dem Zwischenbehälter ortsfest angeordnete Pumpe fördert dabei den Eluensstrom mit konstantem Fluss direkt in die erste Trennsäule der SMB Chromatographieanlage, und zwar unabhängig davon, ob das Eluens nach Durchströmen der Anlage ausgeschleust oder in geschlossenem Kreislauf über den Zwischenbehälter rückgeführt wird.

Dadurch, dass eine Kreislaufstrompumpe eingespart wird und eine Eluentpumpe mit konstantem Fluss verwendet wird, ist es nicht notwendig, die Trennleistung störende Holdup-Volumen der Kreislaufstrom Pumpe durch zusätzliche Maßnahmen auszugleichen, wie z.B. Asynchrones Takten, Säulenlängenveränderung oder Flussanpassung (s.o. Stand der Technik). Auch die Weiterentwicklung des Asynchronen Taktens in einer Zone zu dem Asynchronen Takten mehrerer oder aller Zonen wird so überflüssig, denn die Trennleistung kann im erfindungsgemäßen Verfahren schon direkt durch die Holdup-optimierte Verschaltung der erfindungsgemäßen Chromatographieanlage erreicht werden.

Ebenso kann durch die beschriebene Ausschleusung von verunreinigten Eluensfraktionen im Kreislaufstrom aufwendiges Anhalten oder sogar An- und Abfahren der Anlage vermieden werden. Dies erhöht neben der robusteren Steuerung weiterhin die Wirtschaftlichkeit des Verfahrens durch die beschriebene Erfindung.

Das robustere Trennverfahren der Mehr-Säulen-Chromatographie im Gegenstrombetrieb erlaubt zudem eine effizientere Einbindung in den Herstellungsprozess von Chemikalien und Pharmazeutika. So kann ein Reaktor vorgeschaltet und das ausgehende Produkt direkt als Feed mit der Mehr-Säulen Chromatographie Anlage verbunden werden. Ebenso sind Rückführungen von nicht Zielfraktionen nach weiteren Umlagerungen oder Reaktionen, wie z.B. Re-Racemisierung mittels pH- oder Temperaturshift, in das Feedgemisch oder den Reaktor effizienter möglich.

Ein weiterer Punkt ist, dass sowohl die nachgeschaltete Lösungsmittelaufarbeitung als auch Produktaufarbeitung mittels Eindampf-, Trocknungs- und oder Kristallisations-Stufen effizienter durchzuführen ist, da durch die beschriebene Erfindung der Durchsatz höher, die Produktverdünnung niedriger und die Betriebsströme konstanter sind; denn es kann technisch ein Betriebspunkt gewählt werden, der näher am theoretischen Optimum ist.

In einer besonders bevorzugten Ausführungsform ersetzt zudem ein neuartiges Modular-Valve-System (MVS), welches selbst ebenfalls Gegenstand dieser Erfindung ist, die bekannten Ein- bzw. Mehrwegearmaturen und besticht dabei durch seine Vielseitigkeit. In einem einzigen Verteilerkörper können die zu schaltenden Verfahrenswege durch Einbringen der Ventilköpfe realisiert werden. Des Weiteren können auch Prozessparameter (wie z.B. Druck, Temperatur oder Konzentrationen) über entsprechende Adaptionen ermittelt werden. Das MVS zeichnet sich durch seine kompakte Bauweise, die modulare Erweiterbarkeit, cGMP-relevante Merkmale (Vermeiden von Totvolumina, gute Reinigbarkeit) und hohe Wartungsfreundlichkeit aus. Ventilsitze können auf einfachste Weise ausgetauscht und den Bedürfnissen angepasst werden. Die Kompaktheit ermöglicht sehr kurze Schaltzeiten bei sehr hohen Schaltzyklen. Durch diese wesentlichen Verbesserungen kann im Pilot- und Produktionsmaßstab die Anlagenverfügbarkeit deutlich erhöht werden. Außerdem ist es mit der Erfindung möglich, Anlagen näher am theoretischen Optimum zu betreiben, was den Durchsatz/die Produktivität der Gesamtanlage erhöht.

Aus WO 03/052308 ist bereits ein MVS gemäß dem Oberbegriff des Anspruchs 1 mit einem Ventil bekannt, welches modular aufgebaut ist und pneumatisch betätigt werden kann. Kennzeichnend für dieses Ventil ist ein äußerst geringer Schließweg der Ventilspindel. Auf Grund der Konstruktion dieses Ventils ist jedoch nur eine monodirektionale Durchströmung des Ventils möglich, womit dieses Ventil für den erfindungsgemäßen Einsatz unbrauchbar ist.

Um die Vereinfachung des SMB Verfahrens hin zum erfindungsgemäßen Verfahren zu erleichtern und eine verbesserte und damit bevorzugte Ausführungsform zu ermöglichen, war es notwendig ein Ventil zu entwickeln, welches extrem geringe Schließzeiten bei AUF-/ZU-Stellung hat, eine sehr hohe Anzahl von Schaltzyklen leistet, ohne Verschleißerscheinungen zu zeigen, geringste produktseitige Toträume aufweist, kleine bauliche Abmessungen hat und von beiden Seiten mit Produkt durchströmbar ist, so dass neben der Ventilfunktion in der Grundanwendung auch betriebliche Reinigungsvorgänge durch umgekehrte Strömungsrichtungen und CIP- (Cleaning in Place) bzw. SIP- (Sterilization in Place) Prozeduren einfach durchführbar sind. Ausserdem durften hohe Prozessanforderungen hinsichtlich Druck und Temperatur die Funktionalität des Ventils nicht einschränken. Insbesondere bei der Verschaltung von mehreren Ventilen auf kleinstem Raum ist es unbedingt notwendig, Kompaktventile mit wenigen Bauteilen in modularer Bauweise zu realisieren, die bei Schaltvorgängen ein sehr niedriges hold up und somit scharfe Trennleistungen ermöglichen. Das ideale Ventil sollte trotz eines kleinen Schaltweges eine Stellungsanzeige haben, durch die der Anwender jederzeit die konkrete Ventilstellung erkennen kann. Die automatische bzw. selbsttätige Schaltung des Ventils in eine vorgegebene prozessseitige Sicherheitsstellung bei Steuerenergie-Ausfall sollte im besten Fall auch noch ermöglicht werden. Diesen Anforderungen ist kein aus dem Stand der Technik bekanntes Ventil in vollkommen zufrieden stellender Weise gewachsen.

Überraschenderweise ist es aber möglich, ein MVS zu bauen, das die oben genannten Anforderungen in besonderer Weise erfüllt. Diese erfindungsgemäße MVS besteht aus einer Master-platte, auf der mindestens ein erfindungsgemäßes Ventil montiert ist. Das erfindungsgemäße Ventil besteht aus einem Ventilgehäuse und einem Steuergehäuse, wobei das Steuergehäuse einen innen liegenden Pneumatikraum hat, der durch einen Kolben mit Dichtung in einen unteren Steuerraum und einen oberen Steuerraum geteilt ist. Der untere Steuerraum ist durch eine Abschlussplatte und zusätzliche Dichtungen vom Ventilgehäuse getrennt. Am Kolben sitzt eine verlängerte Ventilspindel , die durch das Ventilgehäuse bis zum Dichtsitz im Bereich der Masterplatte verläuft. Das Ventilgehäuse und das Steuergehäuse sind mit einer Zentrierplatte mit Dichtungen zueinander fixiert. Das Ventilgehäuse ist mit einer zweiten Fixierung, dem Dichtsitz mit zugehörigen Dichtungen , zur Masterplatte positioniert, so dass über einen Zulaufkanal mit seitlichem Querkanal in der Masterplatte eine Kanalverbindung durch den Dichtsitz in den Produktraum des Ventilgehäuses geschaffen ist. Aus dem Produktraum ist wiederum ein Ableitkanal für den Produktaustritt vorhanden wodurch mit dem Zulaufkanal zusammen ein Durchflusskanal gebildet wird. Die Ventilspindel ist zum Kolben beidseitig verlängert, so dass zum einen die Ventilspindel durch den oberen Steuerraum bis außerhalb des Steuergehäuses reicht und zum anderen die Ventilspindel durch das Ventilgehäuse bis in den Dichtsitz verlängert ist, wobei die Ventilspindel eine dichtende Kontur zum Ventilsitz hat und in Zustellung den verlängerten Querkanal vollständig verschließt und den Produktdurchfluss verhindert. Der Dichtsitz ist mit seinen Dichtungen hälftig in der Masterplatte und hälftig im Ventilgehäuse positioniert, so dass sich alle Ventilteile während der Montage zwangsläufig zentrieren und positionieren.

Des Weiteren ist eine kennzeichnende Besonderheit des MVS, dass mehrere Ventile raumsparend angeordnet sind, so dass eine gemeinsame Masterplatte mit einem gemeinsamen zentralen Zuführkanal mindestens zwei Ventilsätze mit gleicher Anzahl von Querkanälen aufnehmen kann und besonders totraumarme Blockventile bildet, welche die in der Prozesschromatographie erforderliche scharfe Stofftrennung durch entsprechende Ansteuerung möglich machen.

Diese erfindungsgemäße Art Ventil ist in einer weiteren besonderen Ausführungsform dadurch gekennzeichnet, dass der druckbeaufschlagte Steuerraum und der druckbeaufschlagte Produktraum durch einen drucklosen Raum getrennt sind und dadurch eine Leckageüberwachung ermöglicht wird.

Das erfindungsgemäße Ventil besitzt eine besondere Dichtkonturpaarung zwischen der unteren, verlängerten Ventilspindel und dem Dichtsitz, dadurch gekennzeichnet, dass unterschiedliche Konturpaarungen und Werkstoffpaarungen zusammenwirken um konzentrische Dichtkonturen zu bilden, welche den Produktdurchfluss bei Zustellung des Ventils sicher verhindern, wobei vorzugsweise eine Konturpaarung Rund zu kegelig verwendet wird.

Weitere bevorzugte Konturen für Ventilsspindel und Dichtsitz sind konkave und oder konvexe Ausführungen von Kugel- und Kegelkonturen, aber auch die Kombination mit geraden Flächen ist möglich.

In einer besonderen Ausführungsform wird die dichtende Ventilspindel so ausgeführt, dass die dichtenden Enden der Ventilspindel ausgehöhlt werden, um eine vollständige Kugel einzusetzen, beide Teile zu verschweißen, und eine extrem glatte Oberflächenkontur für die Dichtfunktion zu erhalten. In einer besonders bevorzugten Ausführungsform der Ventilspindel mit Kugel verlängert die Kugel die Ventilspindel um den Kugelradius und ganz besonders bevorzugt verlängert die Kugel die Spindel um den halben Radius.

Besondere Vorteile bieten diverse Ausführungen der Ventile auf Masterplatten zur Aufnahme von mindestens zwei der erfindungsgemäßen Ventilsätze, wobei die Masterplatte in Form einer viereckigen oder sechseckigen Stange und besonders bevorzugt in räumlicher Form bis zum Dodekaeder ausgebildet ist, wobei die auf der Masterplatte befindliche Anzahl von Ventilen bezogen auf alle Flächen der Masterplatte um ein bis zwei verringert ist. Durch die gemeinsame Masterplatte ist es möglich zwei, drei, vier und mehr Ventile auf kleinstem Raum zu positionieren, wobei auf der Masterplatte für die zentrale Zu- und Abführung des Produkts ein bis zwei Flächen frei bleiben müssen.

Die Verlängerung der Ventilspindel durch das Steuergehäuse ermöglicht die äußere Anbringung eines Stellungsmelders, der die aktuelle Ventilstellung signalisiert.

Ebenfalls Gegenstand dieser Anmeldung sind daher auch Blockventile, welche aus einer Masterplatte bestehen auf der mindestens je zwei Ventilgehäuse mit Steuergehäuse und jeweils zugehörigen Innenbauteilen, und zu jedem Steuergehäuse ein Stellungsanzeiger angebracht ist.

Der Stellungsanzeiger ermöglicht dem Betreiber eine optische Anzeige der konkreten Ventilstellung, der Stellungsanzeiger basiert auf einer elektrischen und oder elektronischen und oder mechanische Signalerzeugung, so dass auch eine preiswerte optische Stellungsanzeige realisierbar wird.

In einer bevorzugten Ausführungsform des erfindungsgemäßen Ventils befindet sich der Ventilsitz vollständig in der Masterplatte.

Der Schließweg der Ventilspindel ist bevorzugt kleiner 5 mm, besonders bevorzugt kleiner 3 mm und ganz besonders bevorzugt kleiner 1 mm.

Zur Herstellung des Ventils können alle metallischen und nichtmetallischen Werkstoffe verwendet werden.

In einer weiteren Ausführungsform dichtet die Ventilspindelkontur das Ventil im Dichtsitz und der Durchmesserverlauf des konzentrischen Dichtbereiches der beiden Konturen ist größer als der hydraulische Durchmesser des Querkanals, bevorzugt liegt der Dichtbereich beim 1,1 bis 1, 3-fachen und besonders bevorzugt liegt der Dichtbereich auf einem Durchmesser im Dichtsitz vom 1,4 bis 1,6-fachen des hydraulischen Durchmessers des Querkanals.

Die erfindungsgemäßen Ventile sind insbesondere geeignet, um eine wechselseitige scharf trennende Produktdurchströmung in Prozess-Chromatographieanlagen zu gewährleisten. Besonders geeignet für die Verwendung in

EP 2 336 617 B1

Prozess-Chromatographieanlagen sind klein gebaute Blockventile mit zentraler Masterplatte.

In Prozess-Chromatographieanlagen, die im wesentlichen aus mehreren in Reihe geschalteten Säulen bestehen, wobei die Säulen beliebig unter einander und zu einander absperrbar sein müssen, sind Ventile über die Produktzu- und die Produktableitung ständig mit Druck beaufschlagt, des weiteren werden die Ventile in kurzen Zeitabständen wechselnd geschaltet um z.B. bei unterschiedlichen Fraktionen (Produktspezifikationen) eine schnelle und scharfe Trennung zu ermöglichen. Da die Produkte in der Regel sehr teuer sind, erhöht das erfindungsgemäße Ventil aufgrund der geringen Schließwege zwischen AUF- und ZUstellung die Leistungsfähigkeit der gesamten Prozesschromatographie-Anlage. Insbesondere wichtig ist die hohe Ventilfunktionalität der Ventile, die in Form einer hohen Dichtheit bei gleichzeitig hoher Anzahl von Schaltzyklen erreicht wird. Daher ist auch eine Anwendung in Batch-Chromatographie-Anlagen möglich.

In einer Ausführungsform der Erfindung hat die Masterplatte einen zentralen Zulaufkanal für das Produkt hat und vom Zulaufkanal zweigen vier Querkanäle zu den auf der Masterplatte adaptierten Ventilen ab. Auf der Masterplatte können mindestens zwei weitere Ventile montiert werden, in dem weitere Ventilgehäuse und Steuergehäuse mit entsprechenden Befestigungselementen (z.B. Schrauben) mit der Masterplatte lösbar verbunden sind. Das Ventilgehäuse wird mittels des Dichtsitzes zur Masterplatte zentriert und die Zentrierung des Steuergehäuses erfolgt mit einer Zentrierplatte , die in die Abschlussplatte eingreift. Im Steuergehäuse ist ein Kolben mit festverbundener beidseitig verlängerter Ventilspindel , um einen oberen und unteren Steuerraum im Steuergehäuse zu bilden. Die verlängerte Ventilspindel erstreckt sich auf der einen Seite bis zum Dichtsitz und auf der anderen Seite bis außerhalb des Steuergehäuses, um außerhalb des Ventils ggf. einen Stellungsmelder aufnehmen zu können. Die inneren Teile des Ventils sind mit elastischen Dichtungen versehen, so dass ein durchströmendes Produkt gezielt durch das Ventil geleitet wird, nicht nach außen entweichen kann, Produktraum und Steuerraum voneinander getrennt sind und eine Leckage bzw. Versagen einer Dichtung erkannt wird. Des Weiteren dienen die eingesetzten Dichtungen dazu, einzelne Ventilbauteile in ihren Ebenen zu dichten. Die Dichtung am Kolben trennt oberen und unteren Steuerraum. Die zwei Dichtungen trennen den unteren Steuerraum vom drucklosen Ventilraum, wobei die innere Dichtung zur Ventilspindel und die äußere Dichtung am Steuergehäuse dichten. Die Zentrierplatte weist ebenfalls zwei Dichtung in einer Ebene auf, so dass eine den Produktraum zur Ventilspindel dichtet und die andere eine Bypassströmung verhindert. Die Zentrierplatte hat eine Querbohrung, die durch die Querbohrung des Ventilgehäuses bis nach außen verlängert ist, so dass sich zwischen Produktraum und Steuerraum ein druckloser Zwischenraum bildet. Die Querbohrungen signalisieren eine Leckage bzw. ein Versagen der produktseitigen Dichtungen.

Die Durchströmung des Ventils mit Produkt erfolgt über den zentralen Zulaufkanal, den Querkanal und den Dichtsitz, so dass das Ende der Ventilspindelkontur umströmt wird und das Produkt durch den Ableitkanal aus dem Ventil strömen kann. Die Produktdurchströmung wird verhindert, wenn z.B. eine eingesetzte Druckfeder im oberen Steuerraum den Kolben mit Ventilspindel in die Kontur des Dichtsitzes drückt. Das Ventil öffnet, wenn z.B. im unteren Steuerraum die angeschlossene Druckluft, Druck aufbaut und die erzeugte Druckkraft größer ist als die Federkraft im oberen Steuerraum, so dass der Kolben sich anhebt, die Ventilspindel aus dem Dichtsitz löst, und ein flüssiger oder gasförmiger Stoff passieren kann.

Es sind drei weitere Positionen der Masterplatte mit Ventilen besetzt, um ein Vierer-Blockventil zu bilden.

In einer Ausführungsform der Erfindung sind in einer sechseckigen Stange bzw. sechseckigen Masterplatte der zentrale Zulaufkanal und die Querkanäle eingebracht sowie an jeder äußeren Fläche eine Aufnahmebohrung der Dichtsitze. Es können auf engem Raum sechs Ventile mit dem Ventilgehäuse und Steuergehäuse positioniert werden und bei einer Sechseckstange sogar ein Mehrfaches von sechs Ventilen hintereinander auf engstem Raum handhabbar sein. Es ist dabei jedoch nicht zwingend erforderlich jede Ventilposition zu bestücken.

In einer Ausführungsform der Erfindung ist der bevorzugte Dichtbereich größer als der hydraulische Querschnitt des Querkanals. Das hat den Vorteil, dass bei einer hohen Anzahl von Schaltzyklen bei hohen Differenzdrücken die dichtenden Konturen nicht verformt werden.

In einer spezielle Form der dichtenden Ventilspindelkontur erfolgt beispielhaft die Herstellung einer sehr glatten dichtenden Oberfläche, durch das Anbringen einer Kugel. Die Kugel ragt dabei teilweise in den Querschnitt der Ventilspindel und ein Teil der Kugel steht erhaben als Schließkontur zur Verfügung.

Es gibt auch ein Verfahren, bei dem eine bestimmte Mengenstromsteuerung eingesetzt wird, die zu einer weiteren Performancesteigerung führt und ebenfalls Gegenstand der vorliegenden Erfindung ist.

Bei der oben beschriebenen SMB Anlage wird der Betriebspunkt über die externen Ströme Feed $Q_F$, Extrakt $Q_{Ex}$ und Raffinat $Q_{Raf}$ sowie den internen Eluensstrom $Q_I$ und die Taktzeit $\tau$ spezifiziert.

Es gibt nun eine Mengenstromsteuerung (siehe Figur 1), in welcher die Mengenströme $Q_F$, $Q_{Ex}$, $Q_{Raf}$ und $Q_I$ kontinuierlich gemessen und über die Drehzahl der entsprechenden Pumpen direkt geregelt (4 Pumpen Fahrweise) werden. Alternativ ist auch die Einstellung der Produktströme $Q_{Ex}$ und $Q_{Raf}$ über geeignete Regelventile anstelle von Austragspumpen möglich (2 Pumpen Fahrweise). Die Einhaltung der Gesamtmassenbilanz, und damit die korrekte Einstellung des Desorbensstromes $Q_D$ als verbleibender externer Strom, wird durch die Füllstandsregelung in der Eluensvorlage erreicht. Diese Füllstandsregelung kompensiert die durch Störungen und/oder Messfehler zwangsläufig verursachten Abweichungen von der nominellen Massenbilanz und bestimmt zusammen mit der Aufschaltung der sich aus den Bilanzen ergebenden nominellen Desorbensmenge

$$Q_D^0 = Q_{Ex} + Q_{Raf} - Q_F + Q_{Dest} \tag{2}$$

den Durchfluss an frisch zugeführtem Desorbens (Eluens):

$$Q_D = Q_D^0 + \Delta Q_D^{\text{LIC}}. \tag{3}$$

Dieser Wert wird dann über die Durchflussregelung der Desorbensmenge eingestellt und mittels kontinuierlicher Durchflussmessung überwacht.

Dabei kann in die Recycleitung nach Zone IV (Figur 1) eine kontinuierliche online Analysenmessung QIS eingebracht werden. Diese löst im Falle einer Verunreinigung des rückgeführten Lösungsmittelstroms (z.B. Durchbruch von Produkt aus Zone IV) eine entsprechende Ventilschaltung aus, so dass der verunreinigte Lösungsmittelstrom ausgeschleust und nicht in die Eluensvorlage zurückgeführt wird.

Die zusätzliche Durchflussmessung im Recyclestrom dient bei qualitätsbedingter Ausschleusung des Recyclestromes zur Bestimmung von $Q_{Dest}$, im bestimmungsgemäßen Betrieb wird durch die Ausnutzung der mit der Messung des Durchflusses $Q_{Dest}$ erzielten Redundanz bei den Mengenstrommessungen und -bilanzen eine Messdatenvalidierung (Data Reconciliation) für sämtliche Mengenströme vorgenommen und damit die Genauigkeit der Mengenstromregelung zusätzlich erhöht.

Die Mengenstromregelung ermöglicht - insbesondere durch den Verzicht auf eine Druckregelung zur Schließung der Massenbilanz - eine genauere und robustere Einstellung der Mengenströme zur Sicherung der Trennleistung der Anlage.

Diese Kombination von Anlagen- und Regelungskonzept ermöglicht sowohl den Betrieb mit geschlossenem als auch mit offenem Kreislauf. Bei offenem Kreislauf kann mittels der online Analysemessung in der Recycleitung eine evtl. Verunreinigung direkt ausgeschleust werden. Im konventionellen Kreislaufbetrieb ist eine Ausschleusung von Verunreinigungen nur über die Produktströme möglich und somit mit einem Verlust an Ergebnis verbunden.

Die Redundanz bei den Mengenstrommessungen und der darauf aufbauende Messfehlerabgleich für die Durchflussmessungen erhöht zusätzlich die Genauigkeit der Mengenstromregelung und sichert damit die Erfüllung der Trennaufgabe.

Mit diesem Anlagen- und Regelungskonzept werden variable Totvolumina und die damit verbundenen Prozessstörungen vermieden. Spezielle Gegenmaßnahmen wie z.B. das asynchrone Schalten der Ventile sind somit nicht mehr erforderlich.

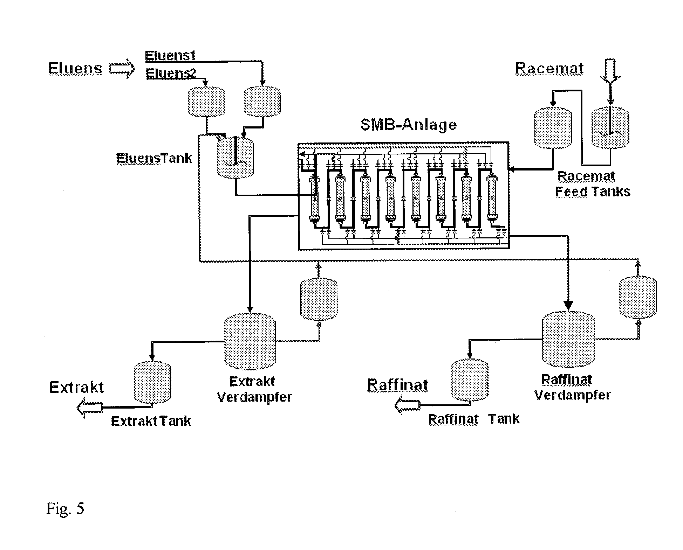

Figur 5 zeigt die Integration des Mehrsäulen Chromatographie Prozesses in ein Gesamtverfahren zur Herstellung von chemischen und pharmazeutischen Substanzen am Beispiel von Razemischen Substanzen. Es besteht die Möglichkeit direkt ohne Zwischenspeicher nach der Reaktion die Reaktionsmischung kontinuierlich in die Chromatographieanlage zu leiten. Weiterhin ist die direkte Aufarbeitung und das Recycling des Lösungsmittels aus den Produktströmen Extrakt und Raffinat in die Eluentvorlage möglich. Die Qualität des Eluenten muss vor erneuter Verwendung in der Chromatographieanlage gemessen und eingestellt werden. Dazu bieten sich je nach geforderter Eluentzusammensetzung eine Reihe von offline Methoden (wie z.B. GC und HPLC) und online Methoden (wie z.B. Ultraschall, kapazitativ, NIR) an. Aus einem Feedbehälter wird in einem weiteren Behälter das Feedgemisch von fester oder fließfähiger Konsistenz in der spezifizierten Eluentzusammensetzung vorgelegt. Extrakt und Raffinat werden aus der Chromatographie Anlage Verdampfern zu geführt und das verdampfte Lösungsmittel in die Eluentvorlagebehälter recyclet. Frisches Lösungsmittel wird aus verschiedenen Eluentvorlagebehältern je nach Anzahl der an der Eluentmischung beteiligten Lösungsmittel zudosiert, bis die geforderte Eluentspezifikation in der Eluent-Zufuhr zur Chromatographie Anlage erreicht ist. Das nach den Verdampfern eingeengte Produkt wird in Behältern gespeichert und in der weiteren Produktaufarbeitung in der Regel kristallisiert, gefiltert, getrocknet. Das Nebenprodukt - im Beispielfall das "falsche" Enantiomer - wird meist aus wirtschaftlichen Gründen re-racemisiert (häufig z.B. durch pH oder Temperatur Wechsel) und nach Qualitätskontrolle dem aus der originären Reaktionsstufe kommenden Feedgemisch zugesetzt.

**Patentansprüche**

1. Modular-Valve-System (MVS), bestehend aus einer Masterplatte, auf der mindestens ein Ventil, bestehend aus einem Ventilgehäuse und einem Steuergehäuse, wobei das Steuergehäuse einen innen liegenden Pneumatikraum hat, der durch einen Kolben mit Dichtung in einen unteren Steuerraum und einen oberen Steuerraum geteilt und der untere Steuerraum durch eine Abschlussplatte und zusätzliche Dichtungen vom Ventilgehäuse getrennt ist, wobei am Kolben eine verlängerte Ventilspindel sitzt, die durch das Ventilgehäuse bis zu einem Dichtsitz im Bereich der Masterplatte verläuft, das Ventilgehäuse und das Steuergehäuse mit einer Zentrierplatte mit Dichtungen zueinander fixiert sind, **dadurch gekennzeichnet, dass** das Ventilgehäuse mit einer zweiten Fixierung, dem Dichtsitz mit zugehörigen Dichtungen, zur Masterplatte positioniert ist, so dass über einen Zulaufkanal mit seitlichem Querkanal in der Masterplatte eine Kanalverbindung durch den Dichtsitz in einen Produktraum des Ventilgehäuses geschaffen ist wobei aus dem Produktraum wiederum ein Ableitkanal für den Produktaustritt vorhanden ist, wodurch mit dem Zulaufkanal zusammen ein Durchflusskanal gebildet wird, weiterhin ist die Ventilspindel zum Kolben beidseitig verlängert, so dass zum Einen die Ventilspindel durch den oberen Steuerraum bis außerhalb des Steuergehäuses reicht und zum anderen die Ventilspindel durch das Ventilgehäuse bis in den Dichtsitz verlängert ist, wobei die Ventilspindel eine dichtende Kontur zum Ventilsitz hat und in Zustellung den verlängerten Querkanal vollständig verschließt und den Produktdurchfluss verhindert, montiert ist.

2. MVS gemäß Anspruch 1, **dadurch gekennzeichnet, dass** es auf einer Masterplatte in Form einer sechseckigen Stange aufgebaut ist.

3. Verwendung eines MVS nach Anspruch 1 in einem Verfahren zur Trennung eines Stoffgemisches.

4. Verwendung eines MVS nach Anspruch 3 in einem Verfahren zur Trennung eines Stoffgemisches mit Hilfe eines Gegenstrom-Chromatographieverfahrens, bei dem einer aus mehr als einer hintereinandergeschalteten, mit einem Adsorbens gefüllten Chromatographiesäulen bestehenden Säulenschaltung ein zu trennendes Stoffgemisch und das Eluens kontinuierlich zugeführt werden und an anderen Stellen der Säulenschaltung ein mindestens eine abgetrennte Komponente enthaltender Extraktstrom, sowie ein mindestens eine andere Komponente enthaltender Raffinatstrom kontinuierlich entnommen werden und bei dem eine Relativbewegung zwischen einer aus dem Stoffgemisch und dem Eluens bestehenden flüssigen, mobilen Phase und dem Adsorbens in fester Phase durch sequentielles Öffnen von Flüssigkeitszugabe- und -entnahmestellen entlang der Säulen erzeugt wird, wobei nur eine Eluenszuführpumpe und ein Eluensausgleichsbehälter, aber keine Kreislaufpumpe im Kreislauf eingesetzt wird.

**Claims**

1. Modular valve system (MVS), consisting of a master board, on which at least one valve, consisting of a valve housing and a control housing, is installed, the control housing having an internal pneumatic space which is divided into a lower control space and an upper control space by a piston having a seal and the lower control space being separated from the valve housing by a closing plate and additional seals, an extended valve spindle being present on the piston, which runs through the valve housing to a seal seat in the area of the master board, the valve housing and the control housing are fixed relative to one another using a centering plate with seals, **characterized in that** the valve housing having a second fixing, the seal seat with associated seals, is positioned in relation to the master board such that by means of a supply channel having a lateral transverse channel in the master board a channel connection is provided by the seal seat in a product space of the valve housing, where from the product space in turn a discharge channel for the product discharge is present, by which with the supply channel together a flow channel is formed, furthermore, the valve spindle is bilaterally extended to the piston such that on the one hand the valve spindle reaches through the upper control space to outside the control housing and on the other hand the valve spindle is extended through the valve housing into the seal seat, the valve spindle having a sealing contour to the valve seat and completely closing in the closed position the extended transverse channel and preventing the product flow.

2. MVS according to Claim 1, **characterized in that** it is constructed on a master board in the form of a hexagonal rod.

3. Use of an MVS according to Claim 1 in a process for the separation of a substance mixture.

4. Use of an MVS according to Claim 3 in a process for the separation of a substance mixture with the aid of a countercurrent chromatography process, in which a substance mixture to be separated and the eluent are continuously supplied to a column circuit consisting of a plurality of chromatography columns packed with an adsorbent and connected in series and in other positions of the column circuit an extract stream comprising at least one separated component, and a raffinate stream comprising at least one other component are continuously removed and in which a relative movement between a liquid, mobile phase consisting of the substance mixture and the eluent and the adsorbent in solid phase is produced by sequential opening of liquid addition and removal positions along the columns, with only one eluent supply pump and an eluent compensation container, but no circulation pump being employed in the circulation.

**Revendications**

1.  Système de vanne modulaire (SVM), se composant d'une plaque maître, sur laquelle est montée au moins une soupape, se composant d'un boîtier de soupape et d'un boîtier de commande, le boîtier de commande présentant une chambre pneumatique située à l'intérieur, qui est divisée en une chambre de commande inférieure et une chambre de commande supérieure au moyen d'un piston avec un joint d'étanchéité et la chambre de commande inférieure est séparée du boîtier de soupape par une plaque de fermeture et des joints d'étanchéité supplémentaires, une tige de soupape prolongée s'appliquant sur le piston et s'étendant à travers le boîtier de soupape jusqu'à un siège étanche dans la région de la plaque maître, le boîtier de soupape et le boîtier de commande sont fixés l'un par rapport à l'autre avec une plaque de centrage munie de joints d'étanchéité, **caractérisé en ce que** le boîtier de soupape est positionné par rapport à la plaque maître avec une deuxième fixation, le siège étanche avec des joints d'étanchéité correspondants, de telle manière qu'une communication par canal soit créée à travers le siège étanche dans une chambre de produit du boîtier de soupape au moyen d'un canal d'arrivée avec un canal transversal latéral dans la plaque maître, un canal d'évacuation partant de nouveau de la chambre de produit pour la sortie de produit, ce qui forme avec le canal d'arrivée un canal de circulation, la tige de soupape est en outre prolongée de part et d'autre du piston, de telle manière que d'une part la tige de soupape passe à travers la chambre de commande supérieure jusqu'à l'extérieur du boîtier de commande et que d'autre part la tige de soupape soit prolongée à travers le boîtier de soupape jusque dans le siège étanche, la tige de soupape présentant un contour étanche par rapport au siège de soupape et, en position de fermeture, obturant complètement le canal transversal prolongé et empêchant le passage de produit.

2.  SVM selon la revendication 1, **caractérisé en ce qu'**il est construit sur une plaque maître en forme de barre hexagonale.

3.  Utilisation d'un SVM selon la revendication 1 dans un procédé pour la séparation d'un mélange de substances.

4.  Utilisation d'un SVM selon la revendication 3 dans un procédé pour la séparation d'un mélange de substances à l'aide d'un procédé de chromatographie à contre-courant, dans lequel on envoie en continu un mélange de substances à séparer et l'éluant à un groupe de colonnes composé de plusieurs colonnes de chromatographie raccordées à la suite l'une de l'autre et remplies d'un adsorbant et on prélève en continu à d'autres endroits du groupe de colonnes un courant d'extrait contenant au moins un composant séparé ainsi qu'un courant de raffinat contenant au moins un autre composant, et dans lequel on produit un mouvement relatif entre une phase mobile liquide composée du mélange de substances et de l'éluant et l'adsorbant en phase solide par l'ouverture séquentielle de points d'addition et de prélèvement de liquide le long des colonnes, le circuit n'utilisant qu'une seule pompe d'addition d'éluant et un réservoir d'équilibrage de l'éluant, mais aucune pompe de circulation.

Fig. 1

Fig. 2

Fig. 3

Fig. 4

Fig. 5

## Verfahrensfließbild

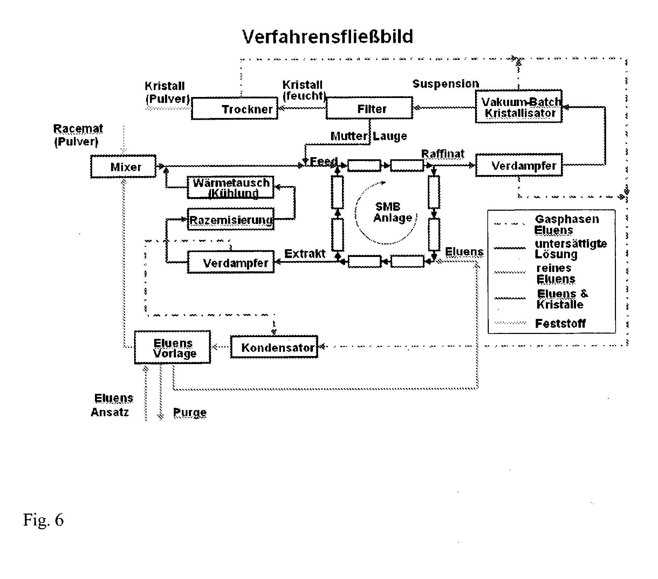

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3706612 A, A.J. de Rosset und R. W. Neuzil
- US 4434051 A
- US 3268605 A
- WO 9216274 A
- EP 0688590 A1
- EP 0688589 A1
- EP 0688588 A1
- DE 19833502 A1
- WO 0025885 A

- WO 9304022 A
- WO 9113046 A
- US 4499115 A
- US 5685992 A
- US 5762806 A
- EP 960642 A1
- EP 688589 B1
- EP 688690 B2
- EP 688588 B1
- WO 03052308 A

**In der Beschreibung aufgeführte Nicht-Patentliteratur**

- *Journal of Chromatography,* 1992, vol. 590, 113-117